# EUROPÄISCHE PATENTSCHRIFT

(11) **EP 3 340 764 B1**
(45) Veröffentlichungstag und Bekanntmachung des Hinweises auf die Patenterteilung: **25.09.2019**
(21) Anmeldenummer: 16758113.1
(22) Anmeldetag: 18.08.2016
(51) Int. Cl.: A01C 7/04

(54) **DOSIERVORRICHTUNG FÜR GRANULARES MATERIAL**
METERING DEVICE FOR GRANULAR MATERIAL
DISPOSITIF DE DOSAGE DE MATIÈRE GRANULAIRE

(30) Priorität: 26.08.2015 DE 102015114145
(43) Veröffentlichungstag der Anmeldung: 04.07.2018
(73) Patentinhaber: Amazonen-Werke H. Dreyer GmbH & Co. KG, 49205 Hasbergen (DE)
(72) Erfinder: JOHANNABER, Stefan Jan, 49536 Lienen (DE); TECKEMEYER, Stephan, 49504 Lotte (DE); RENGER, Stefan, 24626 Gross Kummerfeld (DE)
(86) Internationale Anmeldenummer: PCT/EP2016/069637
(87) Internationale Veröffentlichungsnummer: WO 2017/032692

(56) Entgegenhaltungen:
- DE-A1- 3 633 955
- DE-A1-102012 105 048
- GB-A- 993 732
- US-A- 3 670 671
- US-B2- 7 343 868

## Beschreibung

Die Erfindung betrifft eine Dosierungsvorrichtung für granulares Material, insbesondere für Saatgut.

Derartige Vorrichtungen finden in landwirtschaftlichen Sämaschinen Anwendung, um Saatgut in definierten Mengen an Abgabeelemente weiterzuleiten und dann auf einer landwirtschaftlichen Fläche abzulegen. Für bestimmtes Saatgut, beispielsweise Mais, ist es wünschenswert, einzelne Körner in vorherbestimmten Abständen abzulegen. Um das Saatgut zu vereinzeln, verwenden bekannte Dosiereinrichtungen eine mit einer Druckdifferenz beaufschlagbare Vereinzelungstrommel oder Vereinzelungsscheibe. Die Vereinzelungstrommel oder Vereinzelungsscheibe umfasst in Perforationsreihen angeordnete Perforationen, an denen sich das Saatgut anlagern kann, wodurch es zu einer Vereinzelung kommt.

Diese Vereinzelungstechnik ist jedoch nicht zufriedenstellend für Getreide, wie etwa Weizen, Roggen, Gerste, Hafer oder Raps anwendbar. Eine speziell auf einen derartigen Einsatz gerichtete Dosiervorrichtung ist daher aus der DE 10 2012 105 048 A1 bekannt geworden. Diese Dosiervorrichtung umfasst eine in einem Gehäuse konzentrisch rotierende Fördereinrichtung, die annähernd tangential an eine Innenmantelfläche des Gehäuses anschließt. In der Fördereinrichtung sind Taschen gebildet, in denen Körner des Saatguts gedrängt und kreisförmig befördert werden, bis in einem weiteren Gehäusebereich durch eine veränderte Kontur der Innenmantelfläche des Gehäuses und unter Zentrifugalkrafteinflüssen nur jeweils ein einzelnes Korn in der Tasche verbleibt, während überschüssige Körner abgesondert und zur erneuten Förderung in einen ersten Gehäusebereich zurückgeführt werden.

Diese Dosiervorrichtung hat jedoch den Nachteil, dass die Größe der Taschen der Fördereinrichtung an die Größe des Saatguts angepasst sein muss. Ist die Tasche zu klein ausgebildet, kann sich kein Korn darin anlagern und es kommt zu Fehlstellen bei der Abgabe des granularen Materials. Ist dagegen die Tasche zu groß gewählt, werden mehr als nur ein Korn abgegeben.

Weitere Dosiervorrichtungen für granulares Material sind offenbart in GB 993 732 A und US 3 670 671 A. Aufgabe der Erfindung ist es daher, eine Dosiervorrichtung für granulares Material, insbesondere Saatgut, bereitzustellen, welche eine Dosierung des granularen Materials ermöglicht, die möglichst unabhängig von Form und Größe der Körner ist.

Diese Aufgabe wird durch eine Vorrichtung gemäß Patentanspruch 1 gelöst. Weitere vorteilhafte Ausgestaltungen der Erfindung sind in den abhängigen Ansprüchen angegeben.

Gemäß der Erfindung ist es also vorgesehen, dass ein Zentrierschieber granulares Material entlang einer Führungsfläche eines Führungselements von einem Aufnahmebereich in einen Abgabebereich schiebt und dabei ein Korn zentriert, indem er es beidseitig abstützt oder führt. Nicht zentrierte Körner, die im Aufnahmebereich aufgenommen und entlang der Führungsfläche transportiert werden, können infolge ausgesondert werden, sodass im Abgabebereich das zentrierte Korn verbleibt und an ein Abgabeelement zur Ablage auf einer landwirtschaftlichen Fläche weitergeleitet werden kann. Insbesondere kann genau ein Korn durch den Zentrierschieber zentriert geführt werden. Die Dosiervorrichtung kann also eine Vereinzelungsvorrichtung sein.

Durch das Zusammenwirken des Zentrierschiebers mit dem Führungselement kann also eine Dosierung, insbesondere eine Vereinzelung, des granularen Materials erzielt werden.

Da die seitliche Abstützung und damit Zentrierung für einen weiten Bereich von Korngrößen und Formen erreichbar ist, ist die beschriebene Vereinzelung weniger korngrößenabhängig als der bekannte Stand der Technik.

Die Angabe "beidseitig abstützt oder führt" bedeutet, dass der Zentrierschieber Elemente umfasst, welche das zentrierte Korn an beiden Seiten auf die Drehrichtung des Zentrierschiebers bezogen abstützen oder führen. Damit kann eine Bewegung des Korns quer zur Drehrichtung reduziert oder vermieden werden, sodass das zentrierte Korn im Wesentlichen entlang einer vorbestimmten Bewegungsbahn vom Aufnahmebereich in den Abgabebereich geschoben wird. Um das Korn seitlich zu führen ist es nicht erforderlich, dass der Zentrierschieber stets in direktem Kontakt mit dem Korn steht. Es ist ausreichend, wenn der Zentrierschieber verhindert, dass das Korn einen vorherbestimmten seitlich begrenzten Bereich verlässt.

Als Drehrichtung wird die Bewegungsrichtung bezeichnet, in der sich der Zentrierschieber im Betrieb der Dosiervorrichtung bewegt. Mit anderen Worten bezeichnet die Drehrichtung die Richtung der Vorwärtsbewegung des Zentrierschiebers. Wenn sich der Zentrierschieber entlang einer Kreisbahn bewegt, ist die Bewegungsrichtung an jedem Punkt der Kreisbahn tangential zu dieser. Die Angaben "seitlich" oder "beidseitig" beziehen sich daher auf die Bereiche quer zur Drehrichtung.

Die Angabe "wenigstens teilweise" bedeutet in diesem Zusammenhang, dass der Zentrierschieber das Korn nicht durchgehend vom Aufnahmebereich bis zum Abgabebereich beidseitig abstützen oder führen muss. Beispielsweise kann es Zeit in Anspruch nehmen, bis sich das Korn so relativ zum Zentrierschieber ausgerichtet hat, dass eine beidseitige Abstützung oder Führung möglich ist. Während dieser Zeit kann das Korn bereits einen gewissen Weg vom Aufnahmebereich zum Abgabebereich bewegt werden. Das Korn kann aber auch entlang des gesamten Wegs beidseitig abgestützt oder geführt werden.

Der Zentrierschieber kann auch ein oder mehrere Elemente umfassen, welche das zentrierte Korn in Drehrichtung gesehen nach hinten abstützen. Die Elemente, welche die seitliche Abstützung oder Führung bewirken können zugleich auch die Abstützung nach hinten gewährleisten.

Bei dem granularen Material kann es sich insbesondere um Saatgut handeln, alternativ oder zusätzlich jedoch auch um granulares Düngemittel oder granulares Pestizid. Das Saatgut kann insbesondere Saatgut für Getreide, wie etwa Weizen, Roggen, Gerste, Hafer oder Raps, sein.

Der Zentrierschieber ist so drehbar in dem Gehäuse gelagert, dass er entlang einer Kreisbahn bewegbar ist, wobei das Führungselement wenigstens teilweise entlang der Kreisbahn verläuft, und wobei die Breite der Führungsfläche vom Aufnahmebereich zum Abgabebereich hin wenigstens abschnittsweise abnimmt.

Durch die abnehmende Breite der Führungsfläche können die Körner, welche nicht durch den Zentrierschieber zentriert werden, im Laufe der Bewegung vom Aufnahmebereich in den Abgabebereich aufgrund der wegfallenden Stütze durch die Führungsfläche unter Zentrifugalkrafteinflüssen und/oder Schwerkrafteinflüssen ausgesondert werden. Diese können zur erneuten Förderung in den Aufnahmebereich zurückgeführt werden, insbesondere durch Trägheit und/oder unter Schwerkrafteinfluss. Auch die Breite des Führungselements insgesamt kann vom Aufnahmebereich zum Abgabebereich hin wenigstens abschnittsweise abnehmen.

Die Angabe "wenigstens abschnittsweise" bedeutet, dass die Breite der Führungsfläche und/oder des Führungselements als Ganzes in einem oder mehreren Abschnitten des Führungselements zwischen dem Aufnahmebereich und dem Abgabebereich in Drehrichtung, also zum Abgabebereich hin, abnimmt. Es ist auch möglich, dass in einem oder mehreren Abschnitten des Führungselements zwischen dem Aufnahmebereich und dem Abgabebereich die Breite konstant bleibt, oder sogar in Drehrichtung, also zum Abgabebereich hin, zunimmt. Abschnitte, in denen die Breite abnimmt, können als Dosierabschnitte oder Vereinzelungsabschnitte bezeichnet werden.

Es ist aber auch möglich, dass die Breite der Führungsfläche und/oder des Führungselements als Ganzes entlang der gesamten Strecke zwischen dem Aufnahmebereich und dem Abgabebereich in Drehrichtung, also zum Abgabebereich hin, abnimmt.

Der Zentrierschieber kann so im Gehäuse gelagert sein, dass die Kreisbahn im Betrieb der Dosiervorrichtung im Wesentlichen vertikal verläuft. Mit anderen Worten kann die Drehachse, um die der Zentrierschieber rotiert, horizontal verlaufen, insbesondere im Betrieb parallel zum zu bearbeitenden Boden. Insbesondere kann die Drehachse mit der Horizontalen einen Winkel zwischen 0° und 10°, insbesondere zwischen 0° und 5°, einschließen.

Das Führungselement kann insbesondere radial außerhalb der Kreisbahn verlaufen. Mit anderen Worten kann das Führungselement die Kreisbahn wenigstens teilweise radial umgeben oder begrenzen. Das Führungselement kann insbesondere annähernd tangential entlang bestimmten Abschnitten der Kreisbahn verlaufen, insbesondere im Abschnitt der Kreisbahn zwischen dem Aufnahmebereich und dem Abgabebereich.

Die Kreisbahn kann insbesondere durch ein äußerstes Ende oder eine Spitze des Zentrierschiebers überstrichen werden. Mit anderen Worten kann die Kreisbahn einen Radius aufweisen, der der Länge des Zentrierschiebers entspricht. Die Länge des Zentrierschiebers kann der maximalen radialen Erstreckung des Zentrierschiebers ausgehend von der Drehachse entsprechen.

Als Aufnahmebereich kann ein Teil des Gehäuseinneren bezeichnet werden, in dem im Betrieb ein Reservoir von Körnern des granularen Materials so bereitgestellt wird, dass der Zentrierschieber wenigstens eines dieser Körner aufnehmen und zum Abgabebereich hin bewegen kann.

Der Aufnahmebereich kann ein bestimmtes Kreissegment der Kreisbahn des Zentrierschiebers umfassen.

Im Aufnahmebereich kann eine Zufuhrleitung in das Gehäuse münden, über die granulares Material von einem externen Reservoir eingespeist werden kann.

Als Abgabebereich kann ein Teil des Gehäuseinneren bezeichnet werden, in dem eine Auslassöffnung im Gehäuse angeordnet ist, über die wenigstens ein Korn des granularen Materials, das vom Zentrierschieber in den Abgabebereich geschoben wurde, aus dem Gehäuse ausgebracht werden kann. Das wenigstens eine Korn kann dann an eine Abgabevorrichtung geleitet werden, über die das wenigstens eine Korn auf einer landwirtschaftlichen Fläche abgelegt wird. Das wenigstens eine Korn kann insbesondere dem durch den Zentrierschieber zentrierten Korn entsprechen.

Das wenigstens eine Korn kann dabei insbesondere unter der Wirkung der Fliehkraft in die Auslassöffnung gelangen. Insbesondere kann im Abgabebereich die Stützwirkung des Führungselementes entfallen oder der Verlauf des Führungselementes sich derart ändern, dass das wenigstens eine Korn durch Fliehkraft in die Auslassöffnung gefördert wird.

Als Führungsfläche des Führungselements kann hierin die für die Förderung des granularen Materials vom Aufnahmebereich in den Abgabebereich wirksame Fläche des Führungselements bezeichnet werden. Mit anderen Worten kann die Führungsfläche des Führungselements der Oberfläche des Führungselements entsprechen, auf der Körner des granularen Materials bei der Förderung von dem Aufnahmebereich in den Abgabebereich hin bewegt werden. Aufgrund der Bewegung entlang einer Kreisbahn wird das granulare Material durch Fliehkraft gegen die Führungsfläche des Führungselements gedrückt. Die Führungsfläche des Führungselements dient daher als Stütze für das granulare Material entgegen der Fliehkraft. Alternativ oder zusätzlich können die Körner auch durch die Schwerkraft gegen die Führungsfläche gedrückt werden. Dies kann insbesondere dann der Fall sein, wenn sich der Zentrierschieber gemäß einer Alternative nicht entlang einer Kreisbahn um die Drehachse bewegt, sondern entlang einer Bahn, die wenigstens teilweise parallel zur Horizontalen verläuft.

Wenn die Breite der Führungsfläche wenigstens abschnittsweise abnimmt geht diese Stützwirkung, wie oben erwähnt, für bestimmte Körner des granularen Materials verloren, weshalb diese nicht weiter zum Abgabebereich hin gefördert werden können, sondern ausgesondert werden.

Die Breite der Führungsfläche kann in den entsprechenden Abschnitten kontinuierlich abnehmen. Dadurch können überschüssige Körner sukzessive ausgesondert werden. Diese werden dann sukzessive an den Aufnahmebereich zurückgeführt, sodass ein ausreichendes Reservoir von granularem Material im Aufnahmebereich bereitgestellt werden kann, selbst wenn über die Zufuhrleitung temporär zu wenig granulares Material zugeführt wird. Die Breite der Führungsfläche kann jedoch auch diskontinuierlich abnehmen.

Im Gegensatz zu den aus dem Stand der Technik bekannten Taschen kann der Zentrierschieber für eine Vielzahl von Formen und Größen von Körnern angewendet werden. Es ist insbesondere ausreichend, wenn ein Korn des granularen Materials auch nur teilweise so durch den Zentrierschieber zentriert wird, dass auch bei geringer werdender Ausdehnung der Führungsfläche quer zur Kreisbahn, dass Korn weiterhin zuverlässig entlang des Führungselements zum Abgabebereich hin bewegt werden kann.

Als Breite der Führungsfläche kann insbesondere die Ausdehnung der Führungsfläche quer zur Kreisbahn bezeichnet werden. Die Richtung quer zur Kreisbahn bezeichnet hierin eine Richtung, die an jedem Punkt der Kreisbahn senkrecht zur Tangente und senkrecht zum Radius der Kreisbahn verläuft. Die Ausdehnung der Führungsfläche in dieser Richtung wird entlang der, gegebenenfalls konturierten, Führungsfläche bestimmt.

Das Führungselement kann eine Vertiefung aufweisen, in die der Zentrierschieber wenigstens teilweise eingreift, wobei die Tiefe der Vertiefung entlang der Kreisbahn des Vereinzelungsschiebers vom Aufnahmebereich zum Abgabebereich hin abnimmt. Durch die Vertiefung im Aufnahmebereich ist es möglich, dass zuverlässig Saatgut durch den Zentrierschieber aufgenommen und entlang der Führungsfläche bewegt werden kann. Durch die abnehmende Tiefe der Vertiefung entlang der Kreisbahn kann wiederum eine Aussonderung überschüssiger Körner des granularen Materials bewirkt werden. Die Abnahme der Tiefe geht mit einer Abnahme der Breite der Führungsfläche einher.

Die Vertiefung im Führungselement kann insbesondere einer Nut oder Kerbe entsprechen. Die Nut oder Kerbe kann insbesondere V-förmig ausgebildet sein.

Das Führungselement kann im Abgabebereich einen in Drehrichtung verlaufenden Grat aufweisen. Durch einen solchen Grat wird eine Vereinzelung des granularen Materials weiter gefördert, da entlang des Grats üblicherweise nur ein Korn stabil bewegt werden kann, nämlich das Korn, welches wenigstens teilweise durch den Zentrierschieber zentriert wird. Die vorherbestimmte Bahn entlang der Führungsfläche, entlang der der Zentrierschieber ein Korn zentriert bewegt, kann insbesondere entlang des Grats verlaufen.

Beidseitig des Führungselements kann ein Sammelraum für im Laufe des Transports vom Aufnahmebereich zum Abgabebereich ausgesonderte Körner des granularen Materials angeordnet sein, der mit dem Aufnahmebereich verbunden ist. Dadurch können ausgesonderte Körner wieder für den erneuten Transport vom Aufnahmebereich in den Abgabebereich bereitgestellt werden. Der Sammelraum kann durch die Wandung des Gehäuses begrenzt werden. Der Sammelraum kann gegenüber der Führungsfläche des Führungselements radial nach außen versetzt sein. Die ausgesonderten Körner können sich im Sammelraum also auf Kreisbahnen mit größerem Radius bewegen, als das oder die Körner, die durch den Zentrierschieber entlang der Führungsfläche geschoben werden.

Das Führungselement kann an einer Innenfläche des Gehäuses angeordnet sein, welche den Raum, in dem der Zentrierschieber im Betrieb rotiert, radial begrenzt. Mit anderen Worten kann das Gehäuse im Wesentlichen zylindrisch ausgebildet sein, wobei das Führungselement an der Mantelfläche des Gehäuses angeordnet ist.

Das Führungselement kann Teil der Innenfläche des Gehäuses sein. Alternativ kann das Führungselement zerstörungsfrei lösbar oder nicht zerstörungsfrei lösbar mit der Innenfläche des Gehäuses verbunden sein. Beispielsweise kann das Führungselement an das Gehäuse angeschweißt sein.

Das Führungselement und der Zentrierschieber können in einer gemeinsamen Ebene angeordnet sein, wobei das Führungselement und der Zentrierschieber bezüglich dieser Ebene symmetrisch ausgebildet sind. Die gemeinsame Ebene kann insbesondere eine Rotationsebene des Zentrierschiebers sein.

Falls das Führungselement eine Vertiefung aufweist, können die Punkte mit der größten Tiefe in der gemeinsamen Ebene liegen.

Falls das Führungselement einen Grat aufweist, kann dieser ebenfalls in der gemeinsamen Ebene liegen.

Das Führungselement kann so ausgebildet sein, dass es wenigstens teilweise aus Metall oder Keramik gefertigt ist. Dadurch kann die Verschleißfestigkeit des Führungselements verbessert werden. Das Führungselement kann insbesondere so ausgebildet sein, dass die Führungsfläche wenigstens im Abgabebereich durch eine Metall- oder Keramikoberfläche gebildet wird. Auch im Aufnahmebereich und/oder zwischen Aufnahmebereich und dem Abgabebereich kann die Führungsfläche wenigstens teilweise durch eine Metall- oder Keramikoberfläche gebildet werden. Durch diese Maßnahmen kann der abrasive Verschleiß der Führungsfläche vermindert und die Dosierqualität damit auch bei längerer Nutzungsdauer sichergestellt werden. Zu abrasiven Verschleiß kann es insbesondere kommen, wenn das granulare Material mit Sand, Staub oder dergleichen verunreinigt ist.

Falls Metall Verwendung findet, kann das Metall zusätzlich gehärtet und/oder beschichtet sein. Ein Härten kann beispielsweise durch Vakuumhärten, Induktionshärten, Flammhärten, Nitrieren oder Ähnliches erreicht werden. Auch verschleißfester Stahl mit einem hohen Anteil an Kohlenstoff (C) und Mangan (Mn) im Gefüge kann verwendet werden. Als Beschichtung kommt insbesondere eine Hartverchromung in Frage.

Das Führungselement kann insbesondere ein Metall- oder Keramikelement umfassen, welches so angeordnet ist, dass darauf eine Führungsbahn liegt, entlang derer ein Korn des granularen Materials durch den Zentrierschieber zentriert vom Aufnahmebereich bis zum Abgabebereich bewegt werden kann. Durch das Metall- oder Keramikelement kann abschnittsweise ein mittiger Bereich der Führungsfläche gebildet werden. Der Begriff "mittig" bedeutet hier, dass das Element beidseitig von weiteren Elementen des Führungselements begrenzt wird, die aus einem anderen Material, insbesondere aus Kunststoff, gebildet werden. Abschnittsweise bedeutet, dass in gewissen Bereichen, insbesondere im Abgabebereich auch nur das Metall- oder Keramikelement vorgesehen sein kann. Die beiden begrenzenden Elemente können insbesondere spiegelsymmetrisch ausgebildet sein, wobei das Metall- oder Keramikelement in der Symmetrieebene liegt.

Das Metall- oder Keramikelement kann insbesondere in Form eines Hohlzylinders ausgebildet sein. Insbesondere im Abgabebereich können Kanten des Metall- oder Keramikelements, welche die Führungsfläche begrenzen, angefast sein. Dadurch kann ein Grat ausgebildet werden, die Führungsfläche im Querschnitt also annähernd die Form eines umgekehrten V erhalten.

Das Metall- oder Keramikelement kann austauschbar sein. Dies kann dadurch erreicht werden, dass es zerstörungsfrei lösbar mit dem Gehäuse und/oder weiteren Elementen des Führungselements verbunden werden kann. Beispielsweise kann das Metall- oder Keramikelement kraftschlüssig oder formschlüssig mit dem Gehäuse und/oder weiteren Elementen des Führungselements verbindbar sein. Dadurch, dass das Metall- oder Keramikelement austauschbar ist, kann eine Anpassung an unterschiedliche granulare Materialien erreicht werden. Insbesondere kann die Breite des Metall- oder Keramikelements in Abhängigkeit vom zu verwendenden granularen Material gewählt werden. Beispielsweise kann für Saatgut eine Breite von 1 mm für Raps oder 2,5 mm für Soja verwendet werden. Die Breite kann vom Aufnahmebereich bis zum Abgabebereich konstant sein. Als Breite des Metall- oder Keramikelements kann hier wiederum die Ausdehnung quer zur Kreisbahn bezeichnet werden.

Auch das Führungselement als Ganzes kann austauschbar sein. Dadurch kann in ähnlicher Weise eine Anpassung an unterschiedliche granulare Materialien ermöglicht werden.

Die Dosiervorrichtung kann wenigstens einen weiteren Zentrierschieber umfassen. Dieser kann eines oder mehrere Merkmale des oben genannten Zentrierschiebers aufweisen. Insbesondere kann der wenigstens eine weitere Zentrierschieber so drehbar im Gehäuse gelagert sein, dass er entlang der Kreisbahn bewegbar ist. Mit anderen Worten kann der weitere Zentrierschieber in Umfangsrichtung versetzt zum oben beschriebenen Zentrierschieber angeordnet sein und dem oben beschriebenen Zentrierschieber nachlaufend entlang der Kreisbahn bewegbar sein.

Der Zentrierschieber und der wenigstens eine weitere Zentrierschieber können miteinander verbunden sein, insbesondere starr miteinander verbunden sein.

Der Zentrierschieber und der wenigstens eine weitere Zentrierschieber können an einer gemeinsamen rotierenden Scheibe oder einem gemeinsam rotierenden Ring angeordnet sein.

Der Zentrierschieber und der wenigstens eine weitere Zentrierschieber können ein die Zentrierwirkung des Zentrierschiebers erzeugendes Element aufweisen. Dieses Element kann insbesondere so ausgebildet sein, dass ein Korn des granularen Materials beidseitig stützbar oder führbar ist. Das Element kann nach vorne hin (in Drehrichtung) offen sein. Mit anderen Worten kann eine Abstützung des Korns nach vorne hin unterbleiben.

Der Zentrierschieber kann insbesondere eine in Drehrichtung offene Nut oder Kerbe zur Aufnahme eines Korn des granularen Materials umfassen. Die Nut oder Kerbe kann auch in Richtung der Führungsfläche offen sein. Die Größe der Nut kann so gewählt sein, dass sich maximal ein Korn ganz oder teilweise in der Nut anordnen kann.

Die Nut kann insbesondere konisch oder V-förmig ausgebildet sein. Die Nut kann insbesondere bezüglich der oben genannten gemeinsamen Ebene des Führungselements und des Zentrierschiebers symmetrisch ausgebildet sein. Eine korrespondierende Vertiefung im Führungselement kann ebenfalls symmetrisch bezüglich dieser Ebene ausgebildet sein. Diese Symmetrie erlaubt insbesondere ein beidseitiges Absondern von überschüssigen Körnern in den umgebenden Sammelraum.

In einer alternativen Ausführungsform kann der Zentrierschieber mehrere in Richtung des Führungselements weisende Borsten aufweisen. Wenn die Breite der Führungsfläche zum Abgabebereich hin abnimmt, werden äußere Borsten nicht mehr entlang der Führungsfläche bewegt und können sich infolge der Fliehkraftwirkung aufstellen. Damit können diese Borsten ein Korn des granularen Materials seitlich führen. Nachlaufende Borsten können das Korn in Drehrichtung gesehen nach hinten abstützen. Mit anderen Worten kann sich auch bei einem Borsten umfassenden Zentrierschieber eine konische oder V-förmige Zentrierfläche für ein Korn ausbilden.

Das die Zentrierwirkung des Zentrierschiebers erzeugende Element des Zentrierschiebers kann insbesondere am äußersten Ende oder an der Spitze des Zentrierschiebers angeordnet sein.

Das Zentrierelement kann austauschbar sein. Beispielsweise kann eine die oben genannte Nut des Zentrierschiebers umfassende Spitze des Zentrierschiebers auswechselbar sein. Dadurch kann eine gewisse Anpassung oder Optimierung hinsichtlich der Korngrößen erzielt werden.

Die Dosiervorrichtung kann wenigstens ein Störelement umfassen, welches so ausgebildet ist, dass Körner des granularen Materials, die nicht durch den Zentrierschieber zentriert werden unter Einfluss des Störelements ihre Lage ändern oder vom Transport zum Abgabebereich hin ausgesondert werden. Ein derartiges Störelement begünstigt die Aussonderung überschüssiger Körner und somit die Dosierung oder Vereinzelung des granularen Materials.

Das Störelement kann beispielsweise eine Druckluftdüse umfassen.

Es kann also wenigstens eine Druckluftdüse vorgesehen und so angeordnet sein, dass Druckluft auf granulares Material gerichtet werden kann, welches durch den Zentrierschieber entlang der Führungsfläche des Führungselements geschoben wird. Diese Druckluft kann eine Störung für Körner des granularen Materials darstellen, welche nicht durch den Zentrierschieber zentriert geführt werden. Dadurch kann die Aussonderung von überschüssigen Körnern unterstützt werden. Dies kann auch eine zuverlässigere Dosierung oder Vereinzelung des granularen Materials ermöglichen.

Die Druckluftdüse kann in das Führungselement integriert sein, und insbesondere eine Luftausströmöffnung umfassen, die in der Führungsfläche angeordnet ist. Dadurch ist eine besonders effiziente Störung überschüssiger Körner möglich.

Alternativ oder zusätzlich ist es auch denkbar, eine mit Druckluft beaufschlagbare Scheibe vorzusehen, die gemeinsam mit dem Zentrierschieber rotiert und wenigstens eine Öffnung aufweist, die im Bereich des Zentrierschiebers angeordnet ist. Diese mitlaufende Öffnung kann in Drehrichtung gesehen insbesondere stromabwärts des Zentrierschiebers angeordnet sein, also vorlaufen.

Durch die Druckluftdüse kann Druckluft in radialer und/oder axialer Richtung ausgegeben werden.

Das Störelement kann alternativ oder zusätzlich ein geometrisches Störelement sein. Mit anderen Worten kann das wenigstens eine Störelement einer lokalen Änderung der Geometrie der Führungsfläche des Führungselements entsprechen. Insbesondere kann das wenigstens eine Störelement eine veränderte Neigung der Führungsfläche umfassen. Im Bereich des Störelements kann sich die Geometrie der Führungsfläche insbesondere diskontinuierlich ändern.

Die Erfindung stellt außerdem ein Verfahren gemäß Anspruch 15 bereit. Das Verfahren wird insbesondere mit einer oben beschriebenen Dosiervorrichtung durchgeführt. Das Verfahren umfasst somit ein Bereitstellen einer oben beschriebenen Dosiervorrichtung.

Die Erfindung stellt schließlich noch eine Sämaschine nach Anspruch 16 bereit, umfassend wenigstens eine oben beschriebene Dosiervorrichtung. Bei der Sämaschine kann es sich insbesondere um eine Einzelkornsämaschine handeln. Weitere Merkmale und Vorteile der Erfindung werden nachfolgend anhand der beispielhaften Figuren erläutert. Dabei zeigt:
- Figur 1: einen Querschnitt durch eine beispielhafte Dosiervorrichtung;
- Figur 2: eine perspektivische Ansicht eines Teils einer beispielhaften Dosiervorrichtung;
- Figuren 3 bis 6: Querschnitte eines beispielhaften Zentrierschiebers und eines beispielhaften Führungselements an unterschiedlichen Positionen entlang der Bewegungsbahn des Zentrierschiebers;
- Figuren 7 bis 14: Schnittdarstellungen eines weiteren beispielhaften Zentrierschiebers und eines beispielhaften Führungselements entlang unterschiedlicher Positionen der Bewegungsbahn des Zentrierschiebers;
- Figur 15: einen Querschnitt durch ein beispielhaftes Führungselement;
- Figur 16A und 16B: perspektivische Ansichten von Teilen einer beispielhaften Dosiervorrichtung;
- Figur 17A und 17B: perspektivische Ansichten beispielhafter Elemente einer weiteren Dosiervorrichtung;
- Figur 18: eine perspektivische Ansicht weiterer Teile einer weiteren beispielhaften Dosiervorrichtung;
- Figuren 19A bis 19D: verschiedene Ansichten eines beispielhaften Führungselements an unterschiedlichen Positionen entlang der Bewegungsbahn eines Zentrierschiebers; und
- Figur 20A und 20B: verschiedene Ansichten eines weiteren beispielhaften Führungselements an unterschiedlichen Positionen entlang der Bewegungsbahn eines Zentrierschiebers.

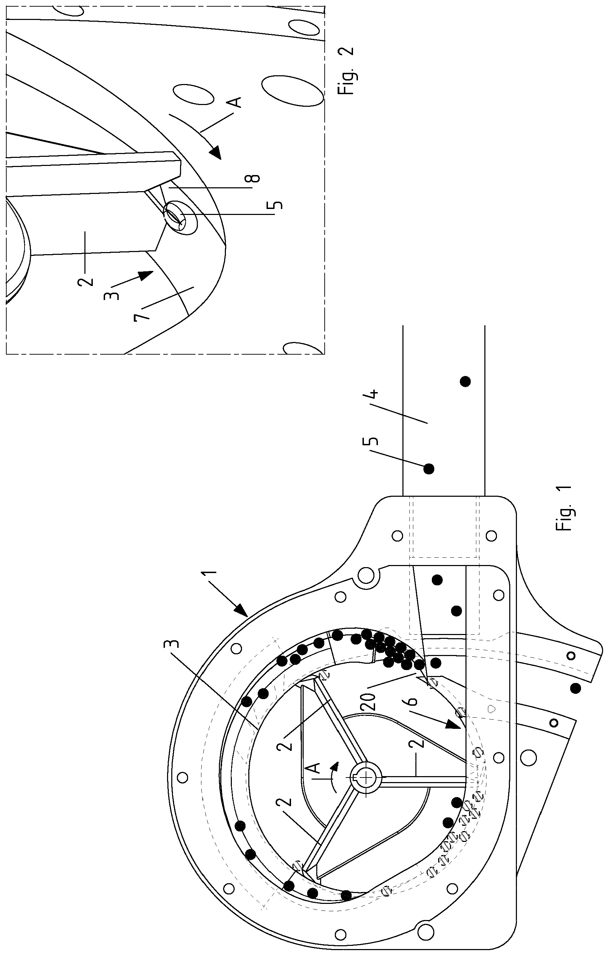

Figur 1 zeigt eine beispielhafte Dosiervorrichtung für granulares Material gemäß der vorliegenden Erfindung. Die Dosiervorrichtung umfasst ein Gehäuse 1, in dem in diesem Beispiel drei Zentrierschieber 2 drehbar gelagert sind. Die Zentrierschieber 2 sind an einer gemeinsamen Scheibe angeordnet und damit starr miteinander verbunden. Die Zentrierschieber 2 bewegen sich entlang einer Kreisbahn, entlang der wenigstens teilweise ein Führungselement 3 verläuft, das die Zentrierschieber 2 bei ihrer Drehbewegung teilweise überstreichen. Der Radius der Kreisbahn entspricht der Länge der Zentrierschieber 2. Die Drehachse verläuft senkrecht zur Zeichnungsebene und ist mit "X" gekennzeichnet. Im Betrieb der Dosiervorrichtung verläuft diese Drehachse im Wesentlichen parallel zur bearbeiteten landwirtschaftlichen Fläche, also horizontal. Die Drehrichtung ist durch einen Pfeil "A" illustriert.

Ein nicht dargestellter Motor oder Antrieb ist vorgesehen, um den Zentrierschieber 2 anzutreiben. Eine Antriebswelle des Motors oder Antriebs kann entlang der Drehachse X verlaufen. Die Scheibe, an der die Zentrierschieber 2 angeordnet sind kann mit der Antriebswelle unmittelbar verbunden sein.

Über eine Zufuhrleitung 4 werden Körner 5 eines granularen Materials, beispielsweise Saatgut, in einen Aufnahmebereich 6 im Gehäuse 1 transportiert. Die Zentrierschieber 2 und das Führungselement 3 wirken jeweils so zusammen, dass im Betrieb der Dosiervorrichtung granulares Material durch den Zentrierschieber 2 entlang einer Führungsfläche des Führungselements 3 von dem Aufnahmebereich 6 in einen Abgabebereich geschoben wird.

Im Abgabebereich ist eine Auslassöffnung 20 vorgesehen, über die das granulare Material aus dem Gehäuse 1 ausgeschleust werden kann. Das so ausgeschleuste granulare Material kann beispielsweise an eine Abgabevorrichtung geleitet werden, welche das granulare Material auf einer landwirtschaftlichen Fläche ablegt. Die Abgabevorrichtung kann beispielsweise ein Säschar umfassen.

Figur 2 zeigt eine perspektivische Detailansicht ausgewählter Elemente der beispielhaften Dosiervorrichtung nach Figur 1. Insbesondere ist in Figur 2 ein Zentrierschieber 2 gezeigt, welcher ein Korn 5 des granularen Materials entlang einer Führungsfläche 7 des Führungselements 3 schiebt. Die Drehrichtung ist wiederum durch einen Pfeil "A" angedeutet. Der Zentrierschieber 2 weist eine in Drehrichtung offene Nut oder Kerbe 8 auf, in welche sich ein Korn 5 des granularen Materials legen kann, sodass es bei der Bewegung vom Aufnahmebereich in den Abgabebereich wenigstens teilweise beidseitig abgestützt und somit zentriert wird. Aufgrund der Fliehkräfte wird das Korn 5 gegen die Führungsfläche 7 gedrückt und richtet sich entsprechend aus.

Die offene Nut oder Kerbe 8 kann eine Breite (Erstreckung quer zur Kreisbahn) von 0,5 cm bis 2 cm, insbesondere 1,5 cm, und eine Länge (Erstreckung entlang der Kreisbahn) von 0,5 cm bis 2 cm, insbesondere 1,5 cm, aufweisen. (hier bitte entsprechende Werte eintragen)

Die Spitze des Zentrierschiebers 2, welche die Nut oder Kerbe 8 umfasst kann austauschbar sein. Dadurch können verschiedene Größen der Nut oder Kerbe 8 vorgesehen werden, um eine gewisse Anpassung an Korngrößenbereiche vornehmen zu können.

Das Führungselement 3 weist in diesem Beispiel eine Vertiefung auf, in die der Zentrierschieber 2 wenigstens teilweise eingreift. Die Führungsfläche 7 ist daher geneigt ausgebildet, insbesondere V-förmig.

Sowohl das Führungselement 3 als auch der Zentrierschieber 2 sind in diesem Beispiel symmetrisch zu einer Ebene ausgebildet, in der der Zentrierschieber 2 rotiert. In dieser Ebene liegt auch eine Führungsbahn entlang der Führungsfläche 7, entlang der das Korn 5 durch den Zentrierschieber 2 zentriert bewegt wird.

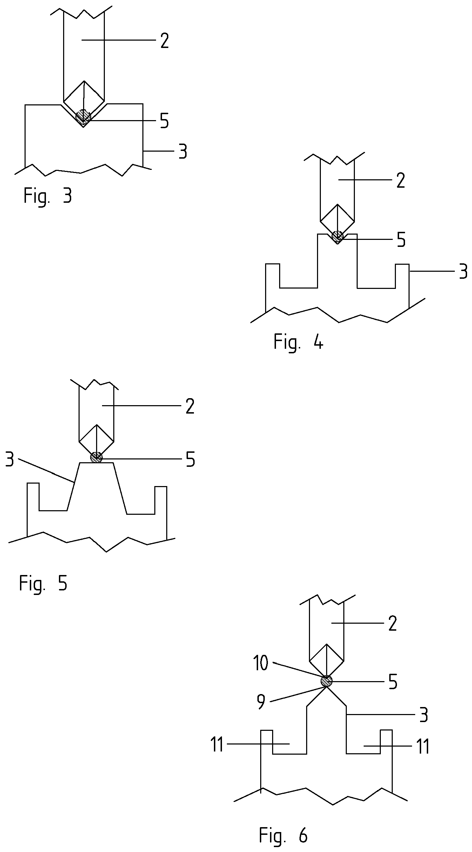

Gemäß dieses Ausführungsbeispiels nimmt die Breite der Führungsfläche 7 des Führungselements 3 vom Aufnahmebereich 6 zum Abgabebereich hin ab. Dies ist in den Figuren 3 bis 6 dargestellt. Figur 3 zeigt einen Querschnitt durch einen beispielhaften Zentrierschieber 2 und ein beispielhaftes Führungselement 3 im Aufnahmebereich. Das Führungselement 3 weist eine Vertiefung oder Kerbe auf, in die der Zentrierschieber 2 teilweise eingreift. Durch diese Vertiefung ist es möglich, dass der Zentrierschieber 2 im Aufnahmebereich sicher wenigstens ein Korn 5 des granularen Materials aufnimmt. Die Drehrichtung verläuft in diesem Fall senkrecht zur Bildebene, aus der Bildebene heraus.

Zum Abgabebereich hin nimmt die Tiefe der Vertiefung ab und damit nimmt auch die Breite der Führungsfläche ab. Im Bereich der Kreisbahn, der in Figur 5 dargestellt wird, ist keine Vertiefung mehr vorhanden. Im Abgabebereich, der in Figur 6 dargestellt wird, hat sich die Form des Führungselements 3 gewissermaßen umgekehrt, so dass ein Grat 9 gebildet wird, der entlang der Kreisbahn verläuft. Der Grat 9 ist so angeordnet, dass er in einer Ebene mit der Spitze 10 des Zentrierschiebers 2 liegt. Dadurch ist es möglich, dass genau ein Korn des granularen Materials, welches vom Zentrierschieber 2 zentriert wird, entlang des Führungselements 3 bewegbar ist. Alle übrigen Körner des granularen Materials, die durch den Schieber 2 eventuell noch entlang des Führungselements 3 geschoben werden, werden zu einer der beiden Seiten des Führungselements 3 abgelenkt und gelangen unter Wirkung der Fliehkraft in einen Sammelraum 11, entlang dem sie zurück in den Aufnahmebereich 6 geleitet werden.

Das entlang dem Grat 9 durch den Zentrierschieber 2 geführte Korn wird schließlich im Abgabebereich in eine Auslassöffnung abgegeben, so dass dieses weiter, beispielsweise an ein Säschar, geleitet werden kann. Dafür kann das Führungselement 3 im Abgabebereich insbesondere eine Unterbrechung aufweisen, sodass die Stütze durch die Führungsfläche 7 entfällt und somit das Korn 5 aufgrund der Fliehkraft in die Auslassöffnung gelangt.

Es sei nochmals betont, dass der Grat 9 nur optional vorgesehen ist. Es sind auch Ausführungsbeispiele denkbar, die diesen Grat 9 nicht umfassen.

Durch das Zusammenwirken des Führungselements 3 und des Zentrierschiebers 2 wie oben beschrieben kommt es also zu einer Vereinzelung des granularen Materials vom Aufnahmebereich zum Abgabebereich. Die hier gezeigte Dosiervorrichtung ist also eine Vereinzelungsvorrichtung.

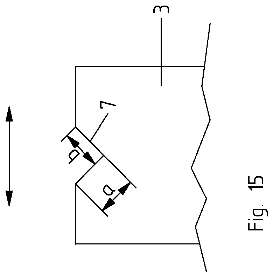

In der Figur 15 ist beispielhaft dargestellt, wie die Breite der Führungsfläche 7 des Führungselements 3 in dem oben genannten Beispiel zu bestimmen ist. Die Richtung quer zur Kreisbahn des Zentrierschiebers ist in der Figur 15 durch einen Doppelpfeil dargestellt. Diese Richtung verläuft senkrecht zur Tangente an die Kreisbahn und senkrecht zum Radius der Kreisbahn. Die Führungsfläche 7 ist in diesem Beispiel aus zwei geneigten Abschnitten a und b zusammengesetzt. Die Breite der Führungsfläche 7 entspricht daher der Summe der Erstreckungen oder Längen der beiden Abschnitte a, b. Nimmt die Tiefe der Vertiefung ab, reduzieren sich auch die Längen der Abschnitte a, b und damit die Breite der Führungsfläche 7.

Es wäre auch denkbar, dass sich bei gleichbleibender Tiefe die Breite der Vertiefung verringert, wodurch ebenfalls die Breite der Führungsfläche 7 abnimmt.

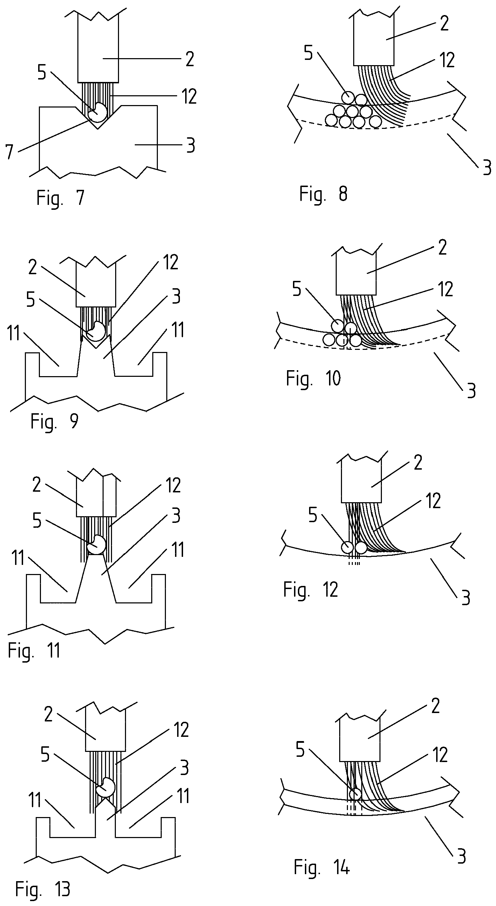

Die Figuren 7 bis 14 zeigen eine alternative Ausführungsform des Zentrierschiebers 2. Der beispielhafte Zentrierschieber 2 umfasst in diesem Fall eine Vielzahl von Borsten 12. Diese streichen, wie insbesondere in Figur 8 ersichtlich entlang der Führungsfläche 7 und nehmen im Aufnahmebereich eine Mehrzahl von Körnern 5 des granularen Materials auf und schieben dieses entlang der Kreisbahn vor sich her.

Mit abnehmender Breite der Führungsfläche 7 sowie des Führungselements 3 insgesamt nimmt die Anzahl der Borsten, welche durch die Führungsfläche 7 abgestützt werden ab. Diese nicht mehr abgestürzten Borsten stellen sich infolge der Fliehkraftwirkung auf und stützen genau ein Korn 5 seitlich ab. Dieses Korn 5 wird so zentriert, dass es trotz schmaler werdender Führungsfläche 7 nicht ausgesondert wird. Die übrigen Körner 5 des granularen Materials, welche nicht zentriert geführt werden, werden unter Fliehkraftwirkung ausgesondert und gelangen in den Sammelraum 11, welcher beidseitig des Führungselements 3 gebildet wird. Durch die Ausrichtung der Borsten ergibt sich im Abgabebereich wiederum eine nach vorne offene abstützende Struktur, welche ein Korn 5 dadurch zentriert, dass es seitlich und gegebenenfalls in Drehrichtung gesehen nach hinten hin abgestützt wird.

Die Breite der Führungsfläche kann im Aufnahmebereich 6 beispielsweise zwischen 1 cm und 3 cm, insbesondere zwischen 1,4 cm und 2 cm, und im Abgabebereich zwischen 0,5 cm und 2,5 cm, insbesondere zwischen 0,8 cm und 1,2 cm, betragen.

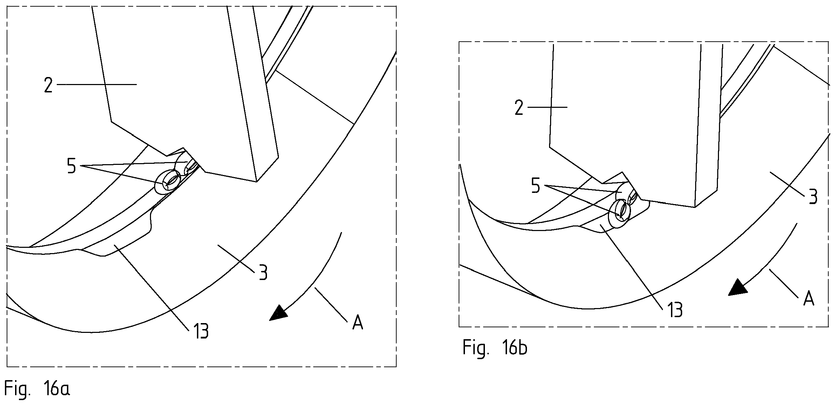

In den Figuren 16A und 16B werden wiederum perspektivisch Elemente einer beispielhaften Dosiervorrichtung dargestellt. Zu erkennen ist ein Teil eines Zentrierschiebers 2 sowie eines Führungselements 3. Durch den Zentrierschieber 2 werden in diesem Beispiel zwei Körner 5 des granularen Materials entlang einer Führungsfläche des Führungselements 3 geschoben. In den Figuren ist außerdem ein geometrisches Störelement 13 gezeigt, welches einer lokalen Änderung der Geometrie der Führungsfläche 7 des Führungselements 3 entspricht. Insbesondere ändert sich bei dem hier gezeigten Störelement 13 die Richtung der Neigung der Führungsfläche. Die Führungsfläche ist hier lokal nach außen geneigt, also von der zentralen Symmetrieebene weg. Das geometrische Störelement 13 ist lokal begrenzt, erstreckt sich also nur entlang eines Teils der Kreisbahn.

Wie Figur 16B illustriert, führt diese lokale Störstelle 13 dazu, dass ein Korn 5 des granularen Materials welches nicht durch den Zentrierschieber 2 zentriert wird unter dem Einfluss des Störelements 13 ausgesondert wird. Dies geschieht insbesondere unter Wirkung der Fliehkraft, da die Bewegung des Korns 5 entlang der Führungsfläche aufgrund der wegfallenden Stütze durch die Führungsfläche instabil wird.

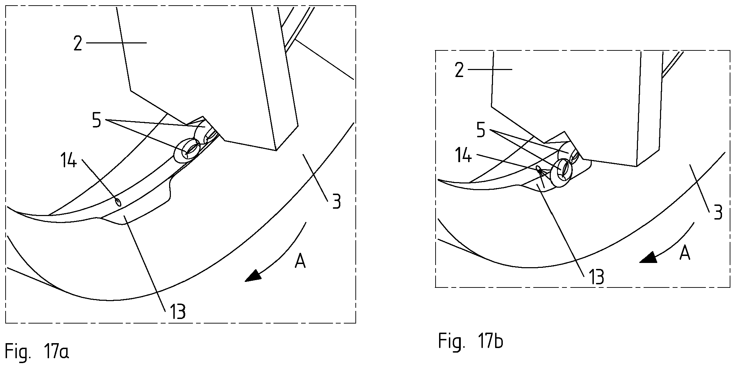

Wie die Figuren 17A und 17B zeigen, kann eine solche geometrische Störstelle 13 auch mit einer Druckluftdüse 14 kombiniert werden, die in diesem Beispiel eine Luftausströmöffnung umfasst, die in der Führungsfläche angeordnet ist. Mit dieser Druckluftdüse kann granulares Material zusätzlich mit Druckluft beaufschlagt werden und damit beim Transport zum Abgabebereich hin ausgesondert werden.

Die Druckluftdüse könnte auch separat, also ohne zusätzliches geometrisches Störelement 13 vorgesehen sein.

Durch das Vorsehen eines Störelements kann vorteilhafter Weise sichergestellt werden, dass im Abgabebereich nur ein einzelnes Korn verbleibt, die Dosiervorrichtung also als Vereinzelungsvorrichtung wirkt.

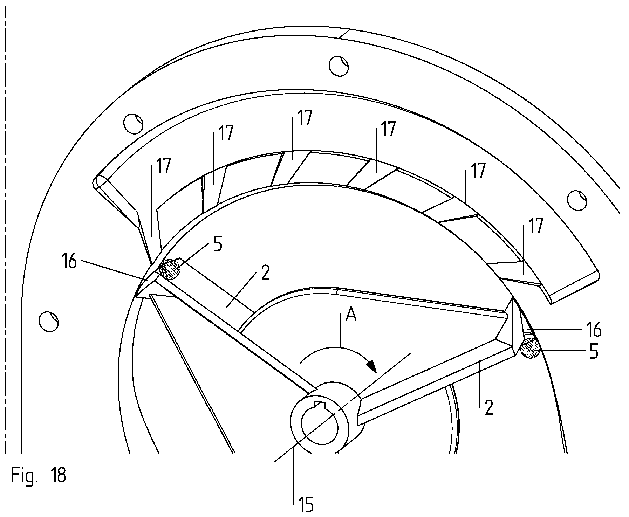

Figur 18 zeigt schließlich eine weitere perspektivische Ansicht von Teilen einer beispielhaften Dosiervorrichtung. Zu sehen sind wiederum zwei Zentrierschieber 2, welche starr miteinander verbunden sind und um eine Drehachse 15 drehbar gelagert sind. Die in Drehrichtung nach vorne und unten hin offenen Kerben 16 sind zu erkennen, welche am Ende oder an den Spitzen der Zentrierschieber 2 angeordnet sind. Diese Enden der Zentrierschieber können austauschbar ausgebildet sein, sodass eine gewisse Anpassung oder Optimierung an Korngrößen stattfinden kann.

Das Führungselement 3 wird zum Abgabebereich hin schmäler, die Breite der Führungsfläche nimmt also ab. Außerdem sind mehrere Störelemente in Form von Druckluftkanälen 17 vorgesehen, über welche Druckluft zum Aussondern von überschüssigen Körnern des granularen Materials zugeführt werden kann.

Die Dosiervorrichtung kann so ausgebildet sein, dass die Fördereinrichtung mit einer Frequenz zwischen 5 Hz und 60 Hz rotiert. Durch eine Ausbildung der Fördereinrichtung mit beispielsweise drei Zentrierschiebern 2, wird so eine Vereinzelungsfrequenz von 15 Hz bis 180 Hz ermöglicht. Dadurch können sehr geringe Abstände zwischen den abgelegten Körnern erzielt werden.

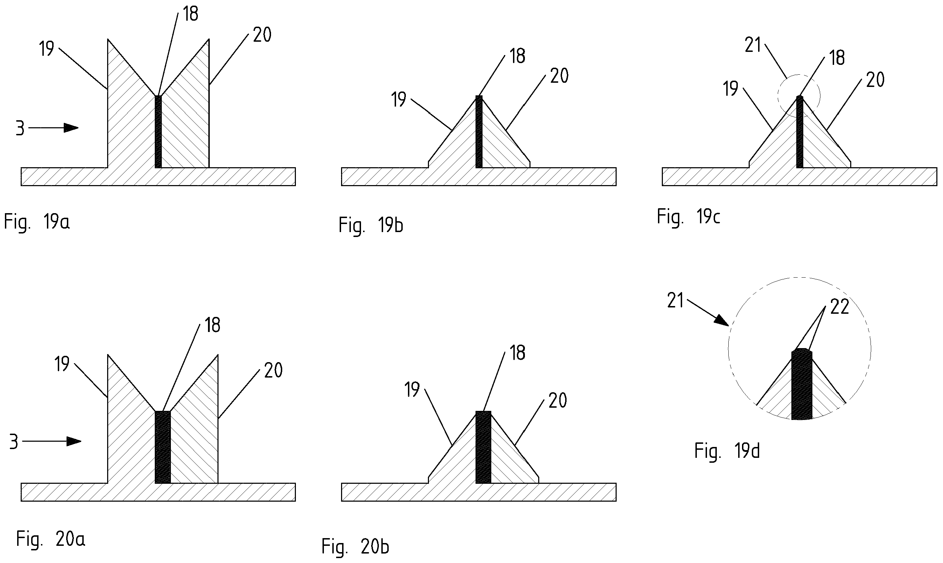

Die Figuren 19A bis 19D zeigen Details eines weiteren beispielhaften Führungselements 3, welches beispielsweise in einer Dosiervorrichtung gemäß Figur 1 Verwendung finden kann. Im Gegensatz zu dem in den Figuren 3-6 gezeigten Führungselement ist das Führungselement der Figuren 19A bis 19D mehrteilig ausgebildet. Das Führungselement 3 umfasst insbesondere ein Metall- oder Keramikelement 18, welches mittig zwischen zwei benachbarten Elementen 19 und 20 des Führungselements 3 angeordnet ist. Das Metall- oder Keramikelement 18 liegt insbesondere in einer Symmetrieebene, bezüglich der die Elemente 19 und 20 spiegelsymmetrisch ausgebildet sind. Das Metall- oder Keramikelement 18 ist in Form eines Hohlzylinders ausgebildet und weist eine konstante Breite von in diesem Beispiel 1 mm auf. Eine solche Breite kann beispielsweise zum Dosieren von Raps Verwendung finden.

Figur 19A zeigt einen Querschnitt durch das beispielhafte Führungselement 3 in der Nähe des Aufnahmebereichs der Dosiervorrichtung, während Figur 19B einen Querschnitt in der Nähe des Abgabebereichs darstellt. Figur 19C zeigt eine alternative Ausführung im Abgabebereich. Im Gegensatz zur Ausführungsform der Figur 19B sind hier die Kanten, welche die Führungsfläche begrenzen angefast, so dass ein Grat gebildet wird. Der Detailbereich 21 ist in Figur 19 D genauer dargestellt. Man erkennt die Fasen 22.

In der hier gezeigten Ausführungsform ist das Metall- oder Keramikelement 18 austauschbar ausgebildet. Dadurch ist eine Anpassung an unterschiedliche granulare Materialien möglich. Diese Anpassung kann insbesondere durch die Wahl der Breite des Metall- oder Keramikelements 18 realisiert werden. Die Figuren 20A und 20B zeigen eine Ausführungsform entsprechend den Figuren 19A und 19B. Die Breite des Metall- oder Keramikelements 18 ist in diesem Beispiel jedoch 2,5 mm. Diese Breite eignet sich beispielsweise zum Dosieren von Soja-Saatgut.

Die Austauschbarkeit des Metall- oder Keramikelements 18 kann dadurch erreicht werden, dass das Element 19 fest mit dem Gehäuse der Dosiervorrichtung verbunden ist, die Elemente 18 und 20 jedoch zerstörungsfrei lösbar mit dem Gehäuse und/oder dem Element 19 verbindbar sind. Um das Metall- oder Keramikelement 18 auszutauschen, kann zunächst Element 20 entfernt werden. Daraufhin kann das Metall- oder Keramikelement 18 ausgetauscht und das Element 20 wiederum befestigt werden.

Das Metall- oder Keramikelement 18, das in diesem Beispiel einen Steg bildet, der sich vom Aufnahmebereich bis zum Abgabebereich erstreckt, weist eine höhere Verschleißbeständigkeit auf als die benachbarten Elemente 19, 20, die in diesem Beispiel aus Kunststoff gefertigt sind. Dadurch kann der abrasive Verschleiß entlang der Führungsbahn, entlang derer ein Korn des granularen Materials zentriert vom Aufnahmebereich zum Abgabebereich bewegt wird, verringert werden. Dies ist wiederum erforderlich, um eine gleichbleibende Vereinzelungsqualität auch über längere Nutzungsdauer zu gewährleisten.

Wenn das Metall- oder Keramikelement 18 aus einem Metall gefertigt ist, kann dessen Oberfläche, welche Teil der Führungsfläche ist, außerdem gehärtet oder beschichtet sein, um die Verschleißfestigkeit weiter zu erhöhen.

Das oben beschriebene Vereinzelungsprinzip der Dosiervorrichtung unterscheidet sich also vom bekannten Stand der Technik, da der Zentrierschieber das granulare Material entlang einer Führungsfläche vor sich herschiebt und nur ein Korn seitlich abstützt und damit zentriert. Damit verbleibt im Abgabebereich im Wesentlichen ein einzelnes Korn. Eventuell vorhandene weitere Körner können mittels Störelementen effektiv ausgesondert werden. Da die seitliche Abstützung und damit Zentrierung für einen weiten Bereich von Korngrößen und Formen erreichbar ist, da es nicht erforderlich ist, das Korn vollflächig abzustützen oder zu zentrieren, ist die beschriebene Vereinzelung weniger korngrößenabhängig als der bekannte Stand der Technik.

## Patentansprüche

1. Dosiervorrichtung für granulares Material, insbesondere Saatgut, umfassend:
einen Zentrierschieber (2), der drehbar in einem Gehäuse (1) gelagert ist; und
ein Führungselement (3), das so angeordnet ist, dass der Zentrierschieber (2) bei seiner Drehbewegung das Führungselement (3) wenigstens teilweise überstreicht;
wobei der Zentrierschieber (2) und das Führungselement (3) so ausgebildet sind, dass im Betrieb der Dosiervorrichtung granulares Material durch den Zentrierschieber (2) entlang einer Führungsfläche (7) des Führungselements (3) von einem Aufnahmebereich (6) in einen Abgabebereich geschoben wird;
wobei der Zentrierschieber (2) so ausgebildet ist, dass er ein Korn (5) des granularen Materials beim Transport vom Aufnahmebereich (6) zum Abgabebereich zentriert, indem der Zentrierschieber (2) Elemente umfasst, welche das zentrierte Korn wenigstens teilweise an beiden Seiten auf die Drehrichtung des Zentrierschiebers bezogen abstützen oder führen;
wobei der Zentrierschieber (2) so drehbar in dem Gehäuse (1) gelagert ist, dass er entlang einer Kreisbahn bewegbar ist;
wobei das Führungselement (3) wenigstens teilweise entlang der Kreisbahn verläuft; und
wobei die Breite der Führungsfläche (7) vom Aufnahmebereich zum Abgabebereich hin wenigstens abschnittsweise abnimmt.

2. Dosiervorrichtung nach Anspruch 1, wobei das Führungselement (3) eine Vertiefung aufweist, in die der Zentrierschieber (2) wenigstens teilweise eingreift, und
wobei die Tiefe der Vertiefung entlang der Kreisbahn des Zentrierschiebers (2) vom Aufnahmebereich (6) zum Abgabebereich hin abnimmt.

3. Dosiervorrichtung nach einem der vorangegangenen Ansprüche, wobei das Führungselement (3) im Abgabebereich einen in Drehrichtung verlaufenden Grat (9) aufweist.

4. Dosiervorrichtung nach einem der vorangegangenen Ansprüche, wobei beidseitig des Führungselements (3) ein Sammelraum (11) für im Laufe des Transports vom Aufnahmebereich (6) zum Abgabebereich ausgesonderte Körner des granularen Materials angeordnet ist, wobei der Sammelraum (11) mit dem Aufnahmebereich (6) verbunden ist.

5. Dosiervorrichtung nach einem der vorangegangenen Ansprüche, wobei das Führungselement (3) an einer Innenfläche des Gehäuses (1) angeordnet ist, welche den Raum, in dem der Zentrierschieber (2) im Betrieb rotiert, radial begrenzt.

6. Dosiervorrichtung nach einem der vorangegangenen Ansprüche, wobei das Führungselement (3) und der Zentrierschieber (2) in einer gemeinsamen Ebene angeordnet sind, wobei das Führungselement (3) und der Zentrierschieber (2) bezüglich dieser Ebene wenigsten teilweise symmetrisch ausgebildet sind.

7. Dosiervorrichtung nach einem der vorangegangenen Ansprüche, umfassend wenigstens einen weiteren Zentrierschieber (2), insbesondere wobei der Zentrierschieber (2) und der wenigstens eine weitere Zentrierschieber (2) miteinander verbunden sind, insbesondere starr miteinander verbunden sind, insbesondere wobei der Zentrierschieber (2) und der wenigstens eine weitere Zentrierschieber (2) an einer gemeinsamen rotierenden Scheibe angeordnet sind.

8. Dosiervorrichtung nach einem der vorangegangenen Ansprüche, wobei der Zentrierschieber (2) eine in Drehrichtung offene Nut (8) zur Aufnahme eines Korns (5) des granularen Materials umfasst, insbesondere wobei die Nut (8) konisch oder V-förmig ausgebildet ist.

9. Dosiervorrichtung nach einem der vorangegangenen Ansprüche, wobei der Zentrierschieber (2) mehrere in Richtung des Führungselements weisende Borsten (12) aufweist.

10. Dosiervorrichtung nach einem der vorangegangenen Ansprüche, wobei die Dosiervorrichtung wenigstens ein Störelement (13, 14) umfasst, welches so ausgebildet ist, dass Körner des granularen Materials, die nicht durch den Zentrierschieber (2) zentriert werden unter Einfluss des Störelements (13, 14) ihre Lage ändern oder vom Transport zum Abgabebereich hin ausgesondert werden.

11. Dosiervorrichtung nach Anspruch 10, wobei das Störelement eine Druckluftdüse (14) umfasst, die so angeordnet ist, dass Druckluft auf granulares Material gerichtet werden kann, welches durch den Zentrierschieber (2) entlang der Führungsfläche (7) des Führungselements (3) geschoben wird, insbesondere wobei die Druckluftdüse (14) in das Führungselement (3) integriert ist.

12. Dosiervorrichtung nach Anspruch 10 oder 11, wobei das Störelement ein geometrisches Störelement (13) umfasst, insbesondere wobei das geometrische Störelement (13) einer lokalen Änderung der Geometrie der Führungsfläche (7) des Führungselements (3) entspricht, insbesondere wobei das geometrische Störelement (13) eine veränderte Neigung der Führungsfläche (7) umfasst.

13. Dosiervorrichtung nach einem der vorangegangenen Ansprüche, wobei das Führungselement (3) wenigstens teilweise aus Metall oder Keramik gefertigt ist, insbesondere wobei die Führungsfläche (7) wenigstens im Abgabebereich durch eine Metall- oder Keramikoberfläche gebildet wird.

14. Dosiervorrichtung nach einem der vorangegangenen Ansprüche, wobei das Führungselement (3) ein, insbesondere austauschbares, Metall- oder Keramikelement (18) umfasst, welches so angeordnet ist, dass darauf eine Führungsbahn liegt, entlang derer ein Korn (5) des granularen Materials durch den Zentrierschieber (2) zentriert vom Aufnahmebereich bis zum Abgabebereich bewegt werden kann.

15. Verfahren zum Dosieren von granularem Material, insbesondere Saatgut, umfassend Bereitstellen einer Dosiervorrichtung nach einem der Ansprüche 1 bis 14 und umfassend die Schritte:
Aufnehmen von granularem Material in einem Aufnahmebereich (6) durch einen Zentrierschieber (2); und
Schieben des granularen Materials vom Aufnahmebereich (6) in einen Abgabebereich, mit dem Zentrierschieber (2);
wobei durch den Zentrierschieber (2) ein Korn des granularen Materials beim. Transport vom Aufnahmebereich (6) zum Abgabebereich zentriert wird, indem der Zentrierschieber (2) Elemente umfasst, welche das zentrierte Korn wenigstens teilweise an beiden Seiten auf die Drehrichtung des Zentrierschiebers bezogen abstützen oder führen.

16. Sämaschine umfassend wenigstens eine Dosiervorrichtung nach einem der Ansprüche 1 - 14.

## Claims

1. Metering apparatus for granular material, in particular seed, comprising:
a centring slide (2), which is mounted in a rotatable manner in a housing (1); and
a guide element (3), which is arranged such that the centring slide (2), during its rotary movement, at least partially sweeps over the guide element (3);
wherein the centring slide (2) and the guide element (3) are configured such that, when the metering apparatus is in operation, granular material is pushed by the centring slide (2) along a guide surface (7) of the guide element (3) from a receiving region (6) into a dispensing region;
wherein the centring slide (2) is configured such that it centres a grain (5) of the granular material during transport from the receiving region (6) to the dispensing region in that the centring slide (2) comprises elements that support or guide the centred grain at least partially on both sides with respect to the direction of rotation of the centring slide;
wherein the centring slide (2) is mounted in the housing (1) in a rotatable manner such that it is movable along a circular path;
wherein the guide element (3) extends at least partially along the circular path; and
wherein the width of the guide surface (7) decreases at least locally from the receiving region to the dispensing region.

2. Metering apparatus according to Claim 1, wherein the guide element (3) has a recess, in which the centring slide (2) at least partially engages, and wherein the depth of the recess decreases along the circular path of the centring slide (2) from the receiving region (6) to the dispensing region.

3. Metering apparatus according to either of the preceding claims, wherein the guide element (3) has, in the dispensing region, a ridge (9) that extends in the direction of rotation.

4. Metering apparatus according to one of the preceding claims, wherein a collecting space (11) for grains of the granular material that have been separated out during transport from the receiving region (6) to the dispensing region is arranged on both sides of the guide element (3), wherein the collecting space (11) is connected to the receiving region (6).

5. Metering apparatus according to one of the preceding claims, wherein the guide element (3) is arranged on an inner surface of the housing (1), said inner surface radially delimiting the space in which the centring slide (2) rotates during operation.

6. Metering apparatus according to one of the preceding claims, wherein the guide element (3) and the centring slide (2) are arranged in a common plane, wherein the guide element (3) and the centring slide (2) are formed at least partially in a symmetric manner with respect to this plane.

7. Metering apparatus according to one of the preceding claims, comprising at least one further centring slide (2), in particular wherein the centring slide (2) and the at least one further centring slide (2) are connected together, in particular are connected rigidly together, in particular wherein the centring slide (2) and the at least one further centring slide (2) are arranged on a common rotating disc.

8. Metering apparatus according to one of the preceding claims, wherein the centring slide (2) comprises a groove (8), which is open in the direction of rotation, for receiving a grain (5) of the granular material, in particular wherein the groove (8) is formed in a conical or V-shaped manner.

9. Metering apparatus according to one of the preceding claims, wherein the centring slide (2) has a plurality of bristles (12) pointing in the direction of the guide element.

10. Metering apparatus according to one of the preceding claims, wherein the metering apparatus comprises at least one disruptive element (13, 14), which is configured such that grains of the granular material that are not centred by the centring slide (2) change their position under the influence of the disruptive element (13, 14) or are separated out from transport towards the dispensing region.

11. Metering apparatus according to Claim 10, wherein the disruptive element comprises a compressed-air nozzle (14), which is arranged such that compressed air can be directed onto granular material that is being pushed along the guide surface (7) of the guide element (3) by the centring slide (2), in particular wherein the compressed-air nozzle (14) is integrated into the guide element (3).

12. Metering apparatus according to Claim 10 or 11, wherein the disruptive element comprises a geometric disruptive element (13), in particular wherein the geometric disruptive element (13) corresponds to a local change in the geometry of the guide surface (7) of the guide element (3), in particular wherein the geometric disruptive element (13) comprises an altered inclination of the guide surface (7).

13. Metering apparatus according to one of the preceding claims, wherein the guide element (3) is manufactured at least partially from metal or ceramic, in particular wherein the guide surface (7) is formed by a metal or ceramic surface at least in the dispensing region.

14. Metering apparatus according to one of the preceding claims, wherein the guide element (3) comprises an, in particular exchangeable, metal or ceramic element (18), which is arranged such that a guide path is located thereon, along which a grain (5) of the granular material can be moved from the receiving region to the dispensing region in a manner centred by the centring slide (2).

15. Method for metering granular material, in particular seed, comprising the provision of a metering apparatus according to one of Claims 1 to 14 and comprising the steps of:
receiving granular material in a receiving region (6) by a centring slide (2); and
pushing the granular material from the receiving region (6) into a dispensing region using the centring slide (2) ;
wherein a grain of the granular material is centred by the centring slide (2) during transport from the receiving region (6) to the dispensing region in that the centring slide (2) comprises elements that support or guide the centred grain at least partially on both sides with respect to the direction of rotation of the centring slide.

16. Seed drill comprising at least one metering apparatus according to one of Claims 1-14.

## Revendications

1. Dispositif de dosage pour un matériau granulaire, notamment des semences, comprenant :
un curseur de centrage (2) qui est monté à rotation dans un boîtier (1) ; et
un élément de guidage (3) qui est disposé de telle sorte que le curseur de centrage (2) balaye au moins partiellement l'élément de guidage (3) lors de son mouvement de rotation ;
le curseur de centrage (2) et l'élément de guidage (3) étant configurés de telle sorte que lors du fonctionnement du dispositif de dosage, du matériau granulaire est amené à glisser par le curseur de centrage (2) le long d'une surface de guidage (7) de l'élément de guidage (3) d'une zone de réception (6) dans une zone de distribution ;
le curseur de centrage (2) étant configuré de telle sorte qu'il centre un grain (5) du matériau granulaire lors du transport de la zone de réception (6) vers la zone de distribution du fait que le curseur de centrage (2) comporte des éléments qui soutiennent ou guident le grain centré au moins partiellement des deux côtés en référence au sens de rotation du curseur de centrage ;
le curseur de centrage (2) étant monté à rotation dans le boîtier (1) de telle sorte qu'il peut être déplacé le long d'une trajectoire circulaire ;
l'élément de guidage (3) s'étendant au moins partiellement le long de la trajectoire circulaire ; et
la largeur de la surface de guidage (7) diminuant au moins par portions de la zone d'accueil vers la zone de distribution.

2. Dispositif de dosage selon la revendication 1, l'élément de guidage (3) possédant un creux dans lequel le curseur de centrage (2) vient au moins partiellement en prise, et
la profondeur du creux le long de la trajectoire circulaire du curseur de centrage (2) diminuant de la zone de réception (6) vers la zone de distribution.

3. Dispositif de dosage selon l'une des revendications précédentes, l'élément de guidage (3) possédant dans la zone de distribution une arête (9) qui s'étend dans le sens de la rotation.

4. Dispositif de dosage selon l'une des revendications précédentes, un espace de collecte (11) pour des grains du matériau granulaire qui sont mis à l'écart au cours du transport de la zone de réception (6) vers la zone de distribution étant disposé de deux côtés de l'élément de guidage (3), l'espace de collecte (11) étant relié à la zone de réception (6).

5. Dispositif de dosage selon l'une des revendications précédentes, l'élément de guidage (3) étant disposé sur une surface intérieure du boîtier (1), laquelle délimite radialement l'espace dans lequel tourne le curseur de centrage (2) lors du fonctionnement.

6. Dispositif de dosage selon l'une des revendications précédentes, l'élément de guidage (3) et le curseur de centrage (2) étant disposés dans un plan commun, l'élément de guidage (3) et le curseur de centrage (2) étant de configuration au moins partiellement symétrique par rapport à ce plan.

7. Dispositif de dosage selon l'une des revendications précédentes, comprenant au moins un curseur de centrage (2) supplémentaire, le curseur de centrage (2) et l'au moins un curseur de centrage (2) supplémentaire étant notamment reliés l'un à l'autre, notamment étant reliés rigidement l'un à l'autre, le curseur de centrage (2) et l'au moins un curseur de centrage (2) supplémentaire étant notamment disposés au niveau d'un disque rotatif commun.

8. Dispositif de dosage selon l'une des revendications précédentes, le curseur de centrage (2) comportant une rainure (8) ouverte dans le sens de la rotation destinée à accueillir un grain (5) du matériau granulaire, la rainure (8) étant notamment réalisée sous forme conique ou en forme de V.

9. Dispositif de dosage selon l'une des revendications précédentes, le curseur de centrage (2) possédant plusieurs poils (12) orientés en direction de l'élément de guidage.

10. Dispositif de dosage selon l'une des revendications précédentes, le dispositif de dosage comportant au moins un élément perturbateur (13, 14) qui est configuré de telle sorte que des grains du matériau granulaire qui ne sont pas centrés par le curseur de centrage (2) changent de position ou sont mis à l'écart du transport vers la zone de distribution sous l'influence de l'élément perturbateur (13, 14).

11. Dispositif de dosage selon la revendication 10, l'élément perturbateur comportant une buse à air comprimé (14) qui est disposée de telle sorte que de l'air comprimé peut être dirigé sur le matériau granulaire qui est amené à glisser par le curseur de centrage (2) le long de la surface de guidage (7) de l'élément de guidage (3), la buse à air comprimé (14) étant notamment intégrée dans l'élément de guidage (3).

12. Dispositif de dosage selon la revendication 10 ou 11, l'élément perturbateur comportant un élément perturbateur géométrique (13), l'élément perturbateur géométrique (13) correspondant notamment à une modification locale de la géométrie de la surface de guidage (7) de l'élément de guidage (3), l'élément perturbateur géométrique (13) comportant notamment une inclinaison modifiée de la surface de guidage (7).

13. Dispositif de dosage selon l'une des revendications précédentes, l'élément de guidage (3) étant au moins partiellement fabriqué en métal ou en céramique, la surface de guidage (7) étant notamment formée par une surface métallique ou céramique, au moins dans la zone de distribution.

14. Dispositif de dosage selon l'une des revendications précédentes, l'élément de guidage (3) comprenant un élément en métal ou en céramique (18), notamment remplaçable, lequel est disposé de telle sorte que sur celui-ci repose une bande de guidage le long de laquelle un grain (5) du matériau granulaire, centré par le curseur de centrage (2), peut être déplacé de la zone de réception jusqu'à la zone de distribution.

15. Procédé de dosage d'un matériau granulaire, notamment des semences, comprenant :
la fourniture d'un dispositif de dosage selon l'une des revendications 1 à 14 et comprenant les étapes suivantes :
accueil de matériau granulaire dans une zone de réception (6) par un curseur de centrage (2) ; et
glissement du matériau granulaire de la zone de réception (6) dans une zone de distribution avec le curseur de centrage (2) ;
un grain du matériau granulaire étant centré par le curseur de centrage (2) lors du transport de la zone de réception (6) vers la zone de distribution du fait que le curseur de centrage (2) comporte des éléments qui soutiennent ou guident le grain centré au moins partiellement des deux côtés en référence au sens de rotation du curseur de centrage.

16. Semoir comprenant au moins un dispositif de dosage selon l'une des revendications 1 à 14.
